# EUROPEAN PATENT SPECIFICATION

(11) **EP 2 917 524 B1**
(45) Date of publication and mention of the grant of the patent: **16.10.2019**
(21) Application number: 13750692.9
(22) Date of filing: 16.08.2013
(51) Int. Cl.: F01N 3/20, B60K 15/03, B60K 13/04

(54) **PLASTIC TANK FOR AN OPERATING FLUID**
KUNSTSTOFFBEHÄLTER FÜR EINE BETRIEBSFLÜSSIGKEIT
RÉSERVOIR EN PLASTIQUE POUR UN FLUIDE DE TRAVAIL

(30) Priority: 06.09.2012 DE 102012108273
(43) Date of publication of application: 16.09.2015
(73) Proprietor: Continental Automotive GmbH, 30165 Hannover (DE)
(72) Inventor: MAGUIN, Georges, F-57155 Marly (FR); DIOUF, Cheikh, F-57530 Silly-sur Nied (FR); FREDERIKSEN, Finn, DK-9370 Hals (DK); HODGSON, Jan, 53840 Troisdorf (DE); SCHEPERS, Sven, 53844 Troisdorf (DE)
(74) Representative: Rössler, Matthias
(86) International application number: PCT/EP2013/067128
(87) International publication number: WO 2014/037210

(56) References cited:
- EP-A1- 2 196 367
- WO-A1-2007/141312
- WO-A1-2008/138757
- DE-A1- 3 825 328
- DE-A1- 4 328 448
- JP-A- 2003 312 799
- JP-A- 2007 083 633

## Description

The invention relates to a plastic tank for an operating liquid, said plastic tank being suitable in particular for storing and providing an operating fluid in a motor vehicle. An operating fluid required in motor vehicles is in particular fuel for driving the motor vehicle. The plastic tank described here is basically suitable for fuels. The plastic tank described here should however serve in particular for providing additional operating fluids such as liquid additives which are supplied to the exhaust gas of an internal combustion engine for exhaust-gas purification.

In motor vehicles, use is made of exhaust-gas treatment devices into which is supplied reducing agent by means of which the method of selective catalytic reduction [SCR method] is carried out in the exhaust-gas treatment device. In said method, nitrogen oxide compounds in the exhaust gas are reduced with the aid of a reducing agent to form non-harmful substances such as H₂O, N₂ and CO₂. Ammonia is often used as reducing agent for this purpose. Ammonia is often stored in motor vehicles not directly but rather in the form of a urea-water solution (also referred to as precursor solution) which can be stored in the plastic tank described here and provided as operating fluid or as liquid additive. For this purpose, a urea-water solution with a urea content of 32.5 % is available under the trade name AdBlue®.

WO 2008/138757 A1 discloses a line feedthrough through a heating pot cover of a heating pot in a reducing agent tank. A suction line penetrates the heating pot cover in an angle. JP 2003-312799 A relates to a relative structure of plastic kerosene tank and oil pump. EP 2 196 367 A1 relates to a washing liquid tank, in particular for windows or projectors of a vehicle.

In the case of plastic tanks to be installed in motor vehicles and in particular in passenger motor vehicles, it is a problem that, in said situation, the available installation space is very limited and often of highly irregular shape. In particular in the field of passenger motor vehicles, space in which an additional tank can be positioned is normally available only in the engine bay or in the underbody region of the motor vehicle.

Furthermore, a plastic tank and also an overall system for the dosed provision of additional operating fluid for a motor vehicle should be as cheap and simple as possible to produce. Taking this as a starting point, it is an object of the present invention to solve or at least alleviate the technical problems highlighted in connection with the prior art. It is sought in particular to propose a particularly advantageous plastic tank for an operating liquid and a particularly advantageous device, which has a plastic tank of said type, for providing an operating liquid.

Said objects are achieved by means of a plastic tank according to the features of claim 1. Further advantageous embodiments are specified in the dependent claims. The features specified individually in the claims may be combined with one another in any desired technologically meaningful way and may be supplemented by explanatory facts from the description and the figures, with further embodiments of the invention being specified.

The invention relates to a plastic tank for an operating fluid, having a tank wall, wherein and at least in sections along the tank wall there is integrated at least one duct which forms a part of a delivery line for delivering operating fluid out of the plastic tank and which in portions runs in the tank wall parallel to the tank wall. At least one heater and/or at least one heat-conducting structure is at least partially integrated into the tank wall which makes it possible for the operating fluid which is situated in the ducts in the tank wall to be heated up in an effective manner.

The plastic tank (a tank comprising or being formed from plastic material) preferably has a shape matched to an available installation space in a motor vehicle. Here, the shape means in particular a spatial configuration or a spatial arrangement of the tank or of the tank wall. The plastic tank is preferably not rotationally symmetrical and is preferably likewise not formed without an undercut, and instead has a more complex shape. In particular, at least the majority of the walls are not planar and/or aligned perpendicular/parallel to one another. It is very particularly preferable for all of the (lateral) walls of the plastic tank to not be planar but rather to be formed (locally) with at least one indentation/outwardly bulged portion.

The operating fluid is preferably a urea-water solution which is used for the method of selective catalytic reduction in an exhaust-gas treatment device. The operating fluid may furthermore be a cooling fluid for cooling at least one operating component of a motor vehicle (for example an internal combustion engine) and/or a cleaning fluid for cleaning at least one component of a motor vehicle (for example a windscreen of a motor vehicle). It is also possible for the operating fluid to be a fuel for operating an internal combustion engine in a motor vehicle.

The plastic tank is preferably composed (predominantly) of the plastic material POM [polyoxymethylene]. The tank wall delimits and forms the plastic tank and is accordingly preferably composed of the said plastic material POM. A tank wall may form a lateral or circumferential side wall of the plastic tank. A tank wall may form a (complete and/or closed) base of the plastic tank. A tank wall delimits the tank interior space to a significant extent, and thus does not refer here to in particular small covers, caps etc.

The duct integrated into the tank wall runs preferably through the tank wall, wherein the duct ends are not rectilinearly connected and arranged congruently one above the other. The at least one integrated duct is in particular not a (single) bore or a (single) opening, but rather the integrated duct preferably runs, in portions, not perpendicular to the tank wall. If appropriate, the at least one duct may, in portions, run in the tank wall at an acute angle with respect to a plane of the tank wall.

The duct in portions runs in the tank wall parallel to the tank wall. The duct thus runs "along" the duct wall itself, such that the duct ends are in particular arranged offset with respect to one another. It is preferable for a plurality of such (intercommunicating) ducts to be provided, such that in particular a duct system is integrated. The duct, in the portion in which it runs along the tank wall, is preferably of non-rectilinear design and/or connected to at least one further duct. The duct may for example be of meandering form.

The at least one integrated duct preferably has a duct length greater than a duct diameter of the duct. The duct length of the at least one integrated duct is furthermore preferably greater than a wall thickness of the tank wall in the region of the at least one integrated duct. There is preferably at least one duct with a duct length of greater than 20 mm [millimeters], preferably even with a duct length of greater than 50 mm. The diameter of the duct is preferably smaller than 10 mm and particularly preferably even smaller than 5 mm.

The at least one duct preferably has at least one duct end which is arranged on an inner surface or on an outer surface of the tank wall. A duct wall refers to an inner surface of the duct within the tank wall. Said duct wall is preferably formed directly from the material of the tank wall, and the tank wall is thus in direct contact with the operating fluid in the duct. This means, for example, that the at least one duct is (at least partially, or at least in a region situated between the duct ends) not formed with an insert. An insert may be a pipe, a hose or a similar component which is formed (jointly) into the tank wall. This does not rule out the possibility of a separate component (for example a sleeve or the like) being integrated into the tank wall (in the region of the connections and/or branches).

A delivery line refers in particular to a flow path via which the operating fluid can be conveyed out of the plastic tank. A delivery line preferably constitutes a line from the interior space of the plastic tank to a consumer for the operating liquid. A consumer may for example be a supply device for supplying the operating fluid to an exhaust-gas treatment device. That the at least one duct forms a part of a delivery line means that the operating fluid flows through the at least one duct while being extracted or delivered from the plastic tank.

In known plastic tanks for such operating fluids in motor vehicles, respectively designed line components were required for extraction, as a result of which the number of parts and assembly outlay were high. Furthermore, sealing problems and tension problems arose in the event of freezing. Likewise, the connections took up installation space. A line component is for example an extraction pipe which is inserted into the tank from above through an opening and which extends from there to the base of the tank. With the plastic tank described here, it is possible to dispense with such line components and to replace these with the at least one duct integrated into the tank wall. This permits a simpler and cheaper design of a device for providing an operating liquid in a motor vehicle having a tank, in which the plastic tank described here is used as a tank.

The plastic tank described here is particularly advantageous if it is produced by means of an injection moulding process.

In an injection moulding process, a plastics material is injected into a cavity of a die and then solidifies in said cavity on the surfaces of the die. The die is later removed, leaving an unprocessed part. The plastic tank or the fully-shaped tank wall of the plastic tank is, in the present case, the unprocessed part. If appropriate, the unprocessed part may subsequently also undergo further processing in a finishing process (for example a cutting production process such as drilling) in order to produce the finished plastic tank. Using the injection-moulding process, it is possible in particular to produce complex tank shapes. This is not readily possible using the blow moulding process which has hitherto been preferred for producing tanks. Using the injection moulding process, the at least one duct can be produced by means of at least one die core which is placed into the die. The die core may also be integrated into and/or onto the die. During the injection of the plastic material, no plastic material passes into the region of the tool die, such that a cavity remains in the tank wall there, which cavity forms the at least one duct. The injection moulding process permits the particularly simple and precise production of the described plastic tank.

The plastic tank is also advantageous if at least one connection element for connecting at least one active component of a delivery unit for delivering the operating fluid to the at least one duct is formed on the tank wall.

By means of such a connection element, it is possible for an active component of a delivery unit for delivering the operating fluid to be connected directly to the tank wall. Active components mean in particular components of the delivery unit which actively impart a function (which may vary in nature and/or scope) during the delivery of the operating fluid. Such active components are in particular the pump of the delivery unit and/or a valve which controls the delivery or the dosing of the operating fluid. Active components may furthermore be sensors which are required for monitoring and/or controlling the operation of the delivery unit (for example pressure sensor and/or temperature sensor). Active components mean in particular ice pressure compensation elements which can accommodate a volume expansion of the operating fluid in the event of freezing in order to prevent destruction of the plastic tank or of the at least one duct in the tank wall or of components connected to the tank wall.

By means of such connection elements directly on the tank wall, it is possible to dispense with an additional carrier element for active components for delivering the operating fluid. For example, there is no longer a need for a base block for the active components. It is preferable if a delivery unit for delivering the operating fluid can be mounted entirely (and directly) on at least one such connection element on the tank wall. This permits a particularly cheap and simple design of a device for providing an operating fluid, comprising a plastic tank for storing the operating fluid.

Furthermore, a plastic tank is advantageous if a connection element is at least one connector designed for connection to a fluid line to an injector.

Such a connector may for example be in the form of an elongate extension of a duct in the tank wall on the outside of the tank wall. On said extension there is preferably provided a thread and/or a groove into which a plug connector of the fluid line for conducting the operating fluid to a supply device can be fastened in a fluid-tight manner.

Furthermore, the plastic tank is advantageous if the at least one connection element is formed in one piece with the tank wall.

This means in particular that, for the at least one connection element, no additional component is integrated into the tank wall, but rather the connection element is formed entirely from the same material as the tank wall. This permits a particularly cheap design of the connection element.

In another design variant, it is however also possible for a bushing or a sleeve, for example, to be integrated into the tank wall in the region of the connection element and to at least partially form the connection element. Such a sleeve may be produced from a metallic material, which may in particular be cast or injection-moulded into the tank wall. The use of such a sleeve for the connection element may for example be advantageous because, in this way, it is possible to adhere to narrower tolerances. This may be an advantage with regard to the fluid-tight connection of active components to the at least one connection element.

Furthermore, the plastic tank has at least one heater which is at least partially integrated into the tank wall.

A heater may for example be cast or injection-moulded into the tank wall. The heater may be inserted into the production die already during the production of the tank wall. During the injection process, the plastics material then moulds around the heater, and the heater becomes an integral constituent part of the tank wall. The heater may for example be formed from electrical resistor elements. In particular, PTC [positive temperature coefficient] elements may be used for the heater. It is also possible for the heater to take the form of liquid lines through which a heating fluid can be conducted. In this connection, it is for example possible for cooling fluid of an internal combustion engine of a motor vehicle to be used as heating fluid.

As a result of the integration of one heater (in particular all of the heaters) into the tank wall, it is made possible for operating fluid which is situated within the tank or within ducts in the tank wall to be heated in a particularly effective manner. It is also possible for frozen, solidified operating fluid to be re-melted. This is advantageous in particular if the operating fluid is urea-water solution.

Additionally or alternatively, the plastic tank is provided with at least one heat-conducting structure which is at least partially integrated into the tank wall.

The heat-conducting structure may be integrated into the tank wall in substantially the same way as a heater. The heat-conducting structure serves to conduct heat within the plastic tank or within the tank wall in an effective manner. By means of the heat-conducting structure, it is possible for heat to be transferred in a targeted manner into the interior space of the tank and/or into the duct in the tank wall. This may be utilized to warm up the operating fluid in the plastic tank in a targeted manner. Alternatively, heat may be conducted out of the interior space of the tank or out of the duct in a targeted manner. This may be utilized, for example, to freeze the operating fluid in the tank at certain positions in a (passive but) targeted manner when corresponding ambient temperatures are reached. This permits directed freezing of the operating fluid, whereby the volume expansion of the operating fluid which occurs can be diverted in certain directions.

The heat-conducting structure may preferably be arranged such that a heater can be coupled to the heat-conducting structure in order to introduce heat into the heat-conducting structure. The heater can preferably be coupled onto the heat-conducting structure from the outside. For this purpose, the heat-conducting structure preferably projects out of the tank wall and preferably has a heater connection to which the heater can be connected.

The heat-conducting structure and/or the heater may preferably also extend through the tank wall from an outer side of the plastic tank in order to heat the interior space of the plastic tank and at the same time permit a connection of the heater from an outer side of the tank.

The integration of heat-conducting structures and/or heaters into the tank wall permits particularly cheap mounting of heat-conducting structures and/or heaters on the tank wall.

The plastic tank is furthermore advantageous if at least one duct in the tank wall opens out at a suction point for the extraction of operating fluid from the plastic tank.

The suction point is preferably that end of a duct in the tank wall which is arranged on the inner surface of the tank wall at as low as possible a point of the plastic tank. The suction point is preferably arranged in the region of a sump in the plastic tank. A sump is a local depression in the base of the plastic tank in which operating fluid collects as the plastic tank empties. A sump is preferably formed by the shape of the plastic tank or by the geometry of the tank wall.

The plastic tank is furthermore advantageous if at least one duct in the tank wall forms a return line through which operating fluid can be circulated from the plastic tank through a delivery unit and back into the plastic tank. The configuration of a delivery unit with a return line of said type makes it possible for air bubbles to be conveyed out of the duct or out of a delivery unit and back into the tank in a particularly simple manner. A delivery unit of said type may be provided particularly cheaply with the described plastic tank. It is preferable here for no portion of the delivery line from the suction point to the end of the return line to exit the tank wall, that is to say for the delivery line to be formed only by the at least one integrated duct and the at least one active component.

Also proposed is a device for providing an operating fluid in a motor vehicle, having at least one plastic tank according to one of the preceding patent claims, in which the operating fluid is stored, and a delivery unit for delivering the operating fluid out of the plastic tank, wherein the delivery unit is formed with at least one active component which is connected to a duct in the tank wall of the plastic tank.

The device for providing an operating fluid is composed in particular of the plastic tank to which the active components required for delivering the operating fluid out of the tank are connected. Such a device is furthermore composed of the delivery unit which is formed by the active components connected to the plastic tank and by the ducts in the tank wall.

The active components and the ducts form a delivery line of the delivery unit of the device, via which delivery line operating fluid can be extracted from the plastic tank. The most important active component for the delivery is typically the pump. The delivery line preferably starts at a suction point within the plastic tank and then runs along a duct into at least one active component. Proceeding from said at least one active component, the delivery line runs to an outlet connection at which the operating fluid is provided.

In a preferred design variant of the device, the at least one active component is arranged within an indentation on an outer side of the plastic tank. The indentation extends in particular (locally) into the interior space of the plastic tank. The indentation is preferably closed off by a cover. The active components of the delivery unit of the device can thus be protected. The outlet connection is formed so as to extend through the cover. The indentation, in which the active components are arranged, of the plastic tank may be arranged at a corner of the plastic tank. The cover then need not be a planar panel but rather may also be an element which is of complex shape and which forms a continuation of the shape of the plastic tank in the region of the indentation.

The device may also have a heater which is connected via a heater connection to a heat-conducting structure integrated into the plastic tank. With a heat-conducting structure of said type, it is possible to warm up operating fluid in the plastic tank. Furthermore, a heat-conducting structure may also be provided which is directly adjacent to ducts in the tank wall. A heat-conducting structure of said type may also have a heater connection to which a heater can be connected. A heat-conducting structure makes it possible for operating fluid which is situated in the ducts in the tank wall to be heated up in an effective manner.

It is furthermore possible for the device to have a return line which is formed by a duct and through which a circulation of operating fluid from the plastic tank through the delivery unit and back into the plastic tank is possible. By means of such circulation, it is possible in a particularly effective manner for air bubbles in the delivery unit to be conveyed out of the delivery unit and in particular out of the delivery line or the duct and the active components of the delivery unit.

The delivery unit may have a return valve by means of which it can be regulated whether operating fluid is provided along the delivery line and/or operating fluid is circulated through the return line. The return valve may be connected to the at least one duct in the tank wall via a connection element.

The device may have a connector which is formed as an integral constituent part of the tank wall or of the plastic tank. The connector may be connected to a fluid line via which the liquid additive can be delivered to an injector, for example on an exhaust-gas treatment device.

All of the advantages and design features presented for the plastic tank are applicable and transferable to the described device. The same applies to the advantages and design features described for the device. Said advantages and design features are transferable to the plastic tank.

The invention can be used in particular in a motor vehicle having an internal combustion engine and having an exhaust-gas treatment device for the purification of the exhaust gases of the internal combustion engine, wherein a described device for providing an operating fluid for the exhaust-gas treatment device is provided. The operating fluid provided by the device in the motor vehicle is in particular urea-water solution. In the exhaust-gas treatment device of the motor vehicle there is preferably arranged an SCR catalytic converter for carrying out the method of selective catalytic reduction. The SCR method is carried out using the operating fluid. On the exhaust-gas treatment device there is preferably provided a supply device (comprising an injector) by means of which the operating fluid provided by the device is supplied to the exhaust-gas treatment device.

The invention and the technical field will be explained in more detail below on the basis of the figures. The figures show particularly preferred exemplary embodiments, to which the invention is however not restricted. In particular, note that the figures and in particular the illustrated proportions are merely schematic. In the figures:
- Fig. 1:: shows a first example of a plastic tank not representative of the invention,
- Fig. 2:: shows a second example of a plastic tank not representative of the invention,
- Fig. 3:: shows a third example of a plastic tank not representative of the invention,
- Fig. 4:: shows an embodiment of a described plastic tank representative of the invention,
- Fig. 5:: shows a first example not representative of the invention of a device for providing operating fluid having a plastic tank,
- Fig. 6:: shows a second example not representative of the invention of a device for providing operating fluid having a plastic tank,
- Fig. 7:: shows an embodiment of a device for providing operating fluid having a plastic tank representative of the invention,
- Fig. 8:: shows a third example not representative of the invention of a device for providing operating fluid having a plastic tank, and
- Fig. 9:: shows a motor vehicle having a described device.

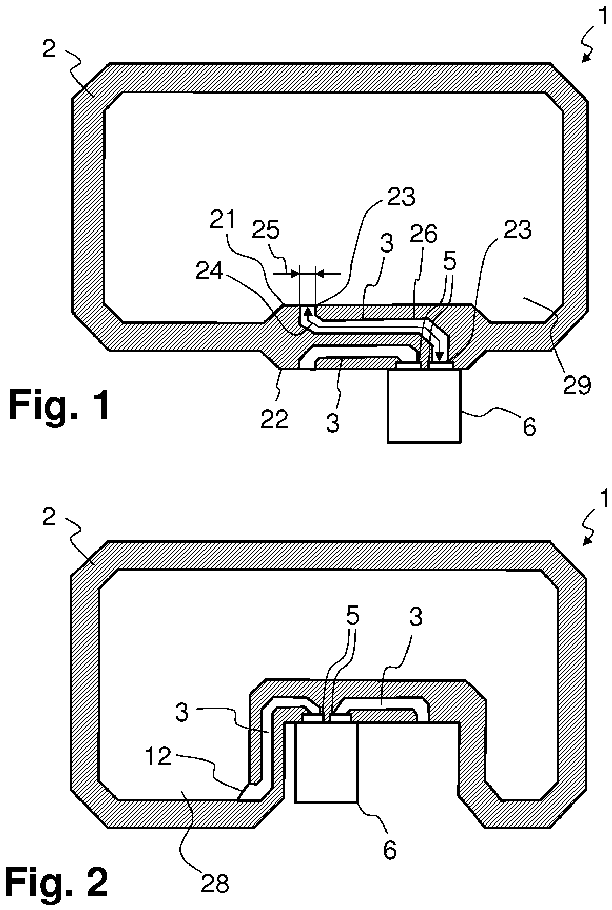

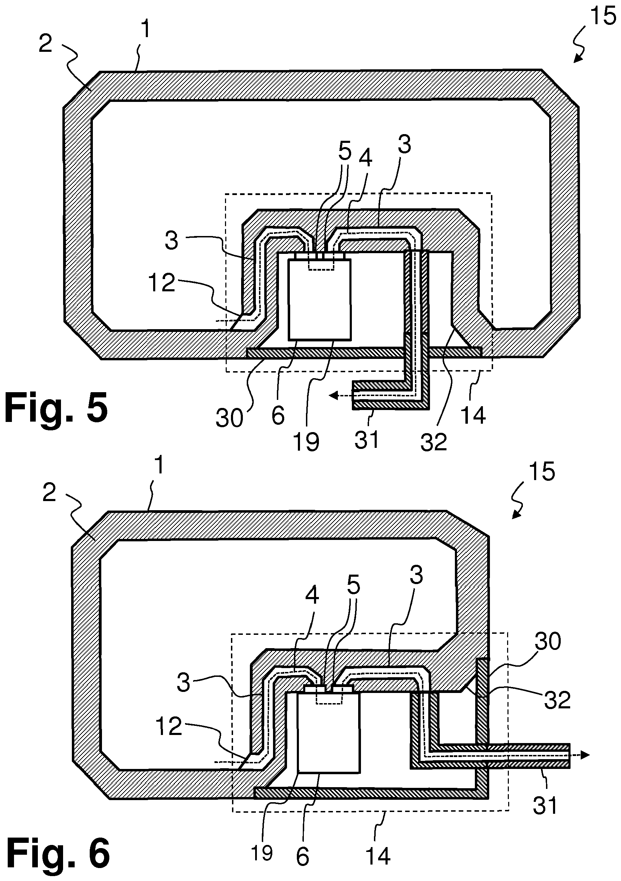

Relevant features of the present invention will be described below on the basis of the different embodiments of the plastic tank 1 illustrated in Figures 1 to 4 and on the basis of the embodiment of a device 15 illustrated in Figures 5 to 8. The individual features presented on the basis of the different exemplary embodiments may be combined with one another in any desired technologically meaningful way by a person skilled in the art.

Figures 1 to 4 show in each case a plastic tank 1 having a tank wall 2. The basic design of the plastic tank 1 is shown in Figure 1. The plastic tank 1 has an interior space 29. The tank wall 2 is preferably produced from plastic. In the tank wall there is provided at least one duct 3. Illustrated here is a duct 3 which enters the tank wall 2 at one duct end 23 on an inner surface 21 of the tank wall 2 and exits the tank wall 2 at a further duct end 23 on an outer surface 22 of the tank wall 2. Also illustrated is a duct 3 which both enters and also exits the tank wall 2 at an outer surface 22 of the tank wall 22. A wide variety of configurations of the duct 3 are possible. The ducts have in each case a duct wall 26 which forms a surface of the duct 3 in the tank wall 2. Said duct wall 26 is preferably formed from the same material as the tank wall 2. This means that there is preferably no insert around the ducts 3, but rather the material of the tank wall 2 extends up to the ducts 3.

The duct 3 has a duct length 24 between its duct ends 23. The duct 3 furthermore has a duct diameter 25. The duct diameter 25 is preferably smaller than the duct length 24. At at least some duct ends 23 of the duct 3 there is formed a connection element 5 at which an active component 6 can be connected to the duct 3 and/or to the ducts 3.

In the example of the plastic tank 1 illustrated in Figure 2 there is likewise illustrated an active component 6 which is connected via connection elements 5 to ducts 3 in the tank wall 2. Also illustrated is a suction point 12 which forms the end of a duct 3 within the plastic tank 1. The suction point 12 is in this case formed in particular in the region of a sump 28 of the plastic tank 1. Said sump 28 forms a particularly low point within the plastic tank 1 at which operating fluid is present for a particularly long time as the plastic tank 1 empties.

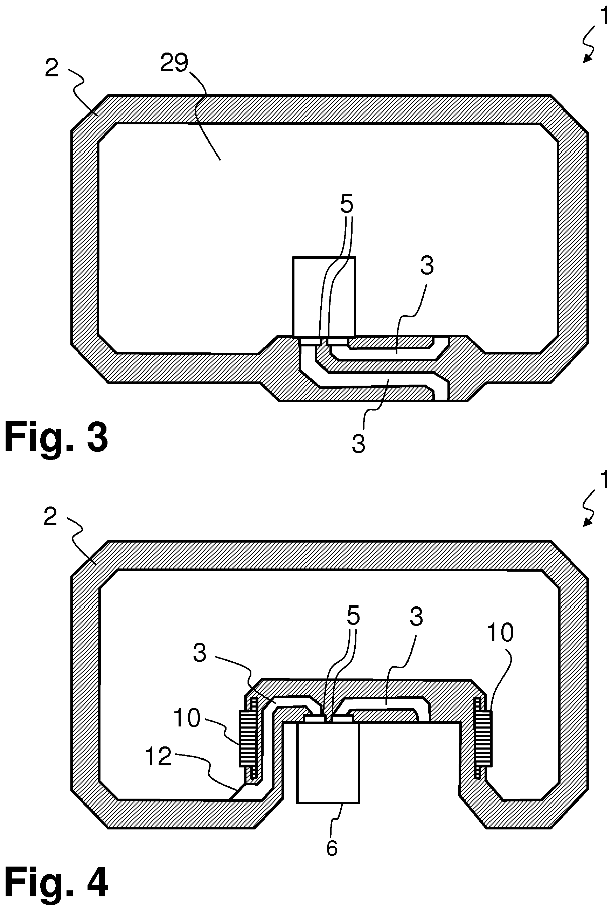

Figure 3 shows a further example of the plastic tank 1 in which ducts 3 are integrated into the tank wall 2. In the embodiment as per Figure 3, an active component 6 is arranged in an interior space 29 of the plastic tank 1 and is connected to connection elements 5 of the ducts 3.

Figure 4 shows an embodiment of the plastic tank 1 in which heaters 10 are at least partially integrated into the tank wall 2 of the plastic tank 1. As illustrated here, the heaters 10 are partially coated by the plastic material of the tank wall 2, such that the heaters 10 are, at one side, in contact with the operating fluid in the plastic tank 1 and, at the other side, connected cohesively and permanently to the tank wall 2. Also illustrated here are the ducts 3 in the tank wall 2. A duct 3 ends at a suction point 12 for the extraction of operating fluid from the plastic tank 1. Furthermore, the ducts 3 have connection elements 5 to which an active component 6 can be connected.

Figures 5 to 8 each show devices 15 for providing operating fluid, which devices each have a plastic tank 1 with a tank wall 2 composed of plastic. The devices 15 are formed substantially by virtue of active components 6 of a delivery unit 14 being connected to connection elements 5 on ducts 3 in the tank wall 2. The active components 6 and the ducts 3 form a delivery line 4 via which operating fluid can be extracted from the plastic tank 1. The active component 6 is in the present case a pump 19. The delivery line preferably starts at a suction point 12 within the plastic tank 1 and then runs along a duct 3 into at least one active component 6. Proceeding from said at least one active component 6, the delivery line runs to an outlet connection 31 at which the operating fluid is provided. In the design variant of the device 15 illustrated in Figure 5, the at least one active component 6 is arranged within an indentation 32 on an outer side of the plastic tank 1. The indentation 32 is formed substantially as a type of inwardly bulged portion which extends into the interior space of the plastic tank 1. The indentation 32 is closed off by a cover 30. The outlet connection is formed so as to extend through the cover 30. The delivery unit 14 of the device 15 may be regarded as that region of the device 15 which is marked by a dashed line and in which the profile of the delivery line 4 and the active components 6 of the delivery unit 14 are situated.

The example illustrated in Figure 6 substantially corresponds to the design variant illustrated in Figure 5. In Figure 6, however, the indentation 32 of the plastic tank 1 is formed at a corner of the plastic tank 1 and the cover 30 is not a planar panel but rather is an element which is of more complex shape and which covers the corner of the plastic tank 1 with the indentation 32.

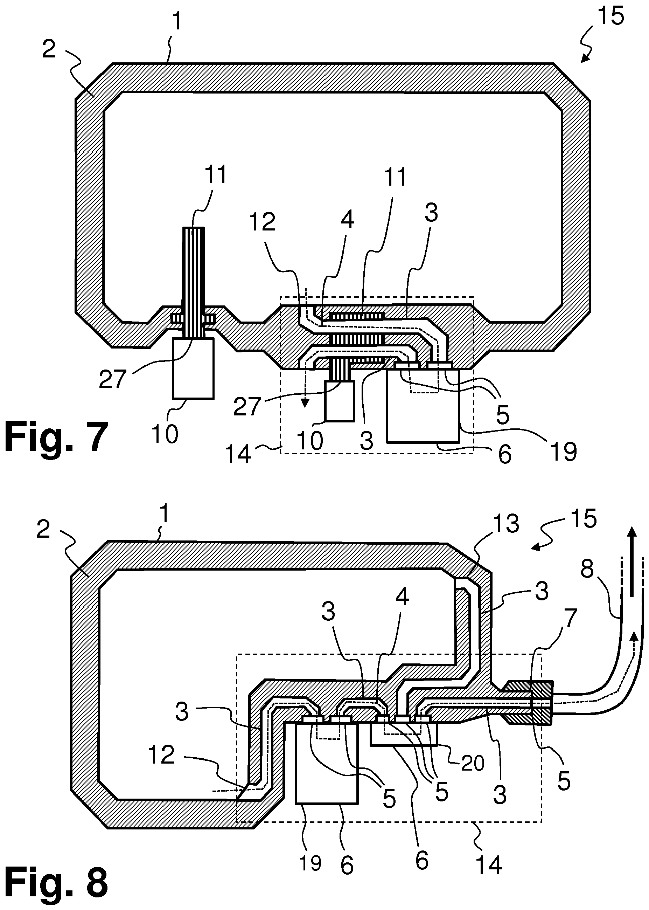

Figure 7 illustrates features of the device 15 which can be transferred in each case to the examples of the device 15 as per Figures 5 and 6. Illustrated firstly is a heat-conducting structure 11 which extends through the tank wall 2. With a heater 10 which is arranged on an outer side of the plastic tank 1 and which is connected to the heat-conducting structure 11 via a heater connection 27, it is possible for operating fluid in the plastic tank 1 to be warmed up via the heat-conducting structure 11. Also illustrated in Figure 7 is a heat-conducting structure 11 which is arranged around the ducts 3 in the tank wall 2. Said heat-conducting structure 11, too, has a heater connection 27 to which a heater 10 can be connected. Said heat-conducting structure 11 makes it possible for operating fluid which is situated in the ducts 3 in the tank wall 2 to be heated up in an effective manner. The two different heat-conducting structures 11 illustrated in Figure 7 may also be integrated individually into a plastic tank. It is not necessary for both heat-conducting structures 11 illustrated in Figure 7 to be provided on the plastic tank 1.

Figure 8 shows an example of the device 15 in which the delivery unit 14 has a return line 13 which is formed by a duct 3 and through which circulation of operating fluid from the plastic tank 1 through the delivery unit 14 and back into the plastic tank 1 is possible. By means of such circulation, it is possible in a particularly effective manner for air bubbles in the delivery unit 14 to be conveyed out of the delivery unit 14 and in particular out of the delivery line 4 or the duct 3 and the active components 6 of the delivery unit 14. The delivery unit 14 illustrated in Figure 8 has a check valve 20 by means of which it can be regulated whether operating fluid is provided along the delivery line 4 for a supply device (not illustrated here) or operating fluid is circulated through the return line 13. The return valve 20 is connected via connection elements 5 to ducts 3 in the tank wall 2. Figure 8 illustrates, as a further feature, a connector 7 which is formed as an integral constituent part of the tank wall 2 or of the plastic tank 1 and to which can be connected a fluid line 8 via which the liquid additive can be delivered to an injector, for example on an exhaust-gas treatment device.

The example illustrated in Figure 8 with a return line 13, and the connection element 5 which is illustrated in Figure 8 and which is designed as a connector 7, may also be transferred separately from one another to other design variants, described here, of the device 15 for providing operating fluid. It is not necessary for both a return line 13 with a return valve 20 and also a connection element 5 designed as a connector 7 to be provided on a plastic tank 1 or on a device 15.

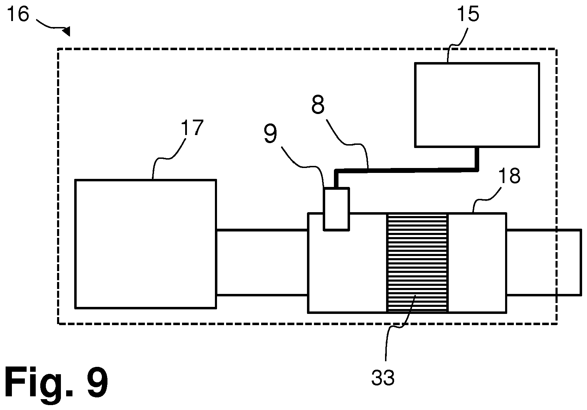

Figure 9 shows a motor vehicle 16 having an internal combustion engine 17 and having an exhaust-gas treatment device 18 for the purification of the exhaust gases of the internal combustion engine 17. In the exhaust-gas treatment device 18 there is preferably provided an SCR catalytic converter 33 for carrying out the method of selective catalytic reduction. Operating fluid for carrying out the method of selective catalytic reduction is supplied to the exhaust-gas treatment device 18 by an injector 9. Operating fluid is supplied to the injector 9 by a device 15 via a fluid line 8.

The plastic tank described here permits particularly simple and cheap production of a device for providing operating fluid in a motor vehicle, which device is suitable in particular for providing urea-water solution.

### List of reference symbols

- 1: Plastic tank
- 2: Tank wall
- 3: Duct
- 4: Delivery line
- 5: Connection element
- 6: Active component
- 7: Connector
- 8: Fluid line
- 9: Injector
- 10: Heating means
- 11: Heat-conducting structure
- 12: Suction point
- 13: Return line
- 14: Delivery unit
- 15: Device
- 16: Motor vehicle
- 17: Internal combustion engine
- 18: Exhaust-gas treatment device
- 19: Pump
- 20: Return valve
- 21: Inner surface
- 22: Outer surface
- 23: Duct end
- 24: Duct length
- 25: Duct diameter
- 26: Duct wall
- 27: Heater connection
- 28: Sump
- 29: Interior space
- 30: Cover
- 31: Outlet port
- 32: Indentation
- 33: SCR catalytic converter

## Claims

1. Plastic tank (1) for storing and providing an operating fluid in a motor vehicle, having a tank wall (2), wherein at least in sections along the tank wall (2) there is integrated at least one duct (3) which forms a part of a delivery line (4) for delivering operating fluid out of the plastic tank (1), wherein the at least one duct (3) in portions runs in the tank wall (2) parallel to the tank wall (2), **characterized in that** at least one heater (10) and/or at least one heat-conducting structure (11) is at least partially integrated into the tank wall (2) which makes it possible for the operating fluid which is situated in the duct (3) to be heated up in an effective manner.

2. Plastic tank (1) according to Claim 1, wherein said plastic tank is produced in an injection moulding process.

3. Plastic tank (1) according to one of the preceding claims, wherein at least one connection element (5) for connecting at least one active component (6) of a delivery unit (14) for delivering the operating fluid to the at least one duct (3) is formed on the tank wall (2).

4. Plastic tank (1) according to Claim 3, wherein a connection element (5) is at least one connector (7) designed for connection to a fluid line (8) to an injector (9).

5. Plastic tank (1) according to either of Claims 3 and 4, wherein the at least one connection element (5) is formed in one piece with the tank wall (2).

6. Plastic tank (1) according to one of the preceding claims, wherein at least one duct (3) in the tank wall (2) opens out at a suction point (12) for the extraction of operating fluid from the plastic tank (1).

7. Plastic tank (1) according to one of the preceding claims, wherein at least one duct (3) in the tank wall (2) forms a return line (13) through which operating fluid can be circulated from the plastic tank (1) through a delivery unit (14) and back into the plastic tank (1).

8. Device (15) for providing an operating fluid in a motor vehicle (16), having at least one plastic tank (1) according to one of the preceding claims, in which the operating fluid is stored, and a delivery unit (14) for delivering the operating fluid out of the plastic tank (1), wherein the delivery unit (14) is formed with at least one active component (6) which is connected to a duct (3) in the tank wall (2) of the plastic tank (1).

9. Motor vehicle (16) having an internal combustion engine (17), having an exhaust-gas treatment device (18) for the purification of the exhaust gases of the internal combustion engine (17), and having a device (15) according to Claim 8 for providing an operating fluid for the exhaust-gas treatment device (18).

## Patentansprüche

1. Kunststofftank (1) zur Speicherung und Bereitstellung eines Betriebsfluids in einem Kraftfahrzeug, der eine Tankwand (2) aufweist, wobei mindestens in Sektionen entlang der Tankwand (2) mindestens ein Kanal (3) integriert ist, der einen Teil einer Zuleitung (4) bildet, um Betriebsfluid aus dem Kunststofftank (1) bereit zu stellen, wobei der mindestens eine Kanal (3) in Abschnitten in der Tankwand (2) parallel zu der Tankwand (2) verläuft, **dadurch gekennzeichnet, dass** mindestens eine Heizung (10) und/oder mindestens eine wärmeleitende Struktur (11) mindestens teilweise in die Tankwand (2) integriert ist, wodurch das in dem Kanal (3) befindliche Betriebsfluid effektiv erwärmt werden kann.

2. Kunststofftank (1) nach Anspruch 1, wobei der Kunststofftank in einem Spritzgießprozess hergestellt wird.

3. Kunststofftank (1) nach einem der vorangehenden Ansprüche, wobei mindestens ein Verbindungselement (5) zum Verbinden mindestens einer aktiven Komponente (6) einer Fördereinheit (14) zum Zuführen des Betriebsfluids zu dem mindestens einen Kanal (3) an der Tankwand (2) ausgebildet ist.

4. Kunststofftank (1) nach Anspruch 3, wobei ein Verbindungselement (5) mindestens ein Verbinder (7) ist, der zum Verbinden mit einer Fluidleitung (8) zu einem Injektor (9) ausgelegt ist.

5. Kunststofftank (1) nach den Ansprüchen 3 und 4, wobei das mindestens eine Verbindungselement (5) einstückig mit der Tankwand (2) ausgebildet ist.

6. Kunststofftank (1) nach einem der vorangehenden Ansprüche, wobei sich mindestens ein Kanal (3) in der Tankwand (2) an einem Saugpunkt (12) öffnet, um Betriebsfluid aus dem Kunststofftank (1) abzuziehen.

7. Kunststofftank (1) nach einem der vorhergehenden Ansprüche, wobei mindestens ein Kanal (3) in der Tankwand (2) eine Rücklaufleitung (13) bildet, durch die Betriebsfluid aus dem Kunststofftank (1) durch eine Fördereinheit (14) und zurück in den Kunststofftank (1) zirkuliert werden kann.

8. Vorrichtung (15) zur Bereitstellung eines Betriebsfluids in einem Kraftfahrzeug (16), die mindestens einen Kunststofftank (1) nach einem der vorangehenden Ansprüche, in dem das Betriebsfluid gespeichert wird, und eine Zufuhreinheit (14) zum Zuführen des Betriebsfluids aus dem Kunststofftank (1) aufweist, wobei die Fördereinheit (14) mit mindestens einer aktiven Komponente (6) ausgebildet ist, die mit einem Kanal (3) in der Tankwand (2) des Kunststofftanks (1) verbunden ist.

9. Kraftfahrzeug (16), das einen Verbrennungsmotor (17) aufweist, der eine Abgasbehandlungsvorrichtung (18) zur Reinigung der Abgase des Verbrennungsmotors (17) aufweist, und eine Vorrichtung (15) nach Anspruch 8 für die Bereitstellung eines Betriebsfluids für die Abgasbehandlungsvorrichtung (18) aufweist.

## Revendications

1. Réservoir en plastique (1) pour le stockage et la fourniture d'un fluide de travail dans un véhicule automobile, comportant une paroi de réservoir (2), au moins un conduit (3) faisant partie d'une ligne de distribution (4) pour distribuer du fluide de travail hors du réservoir en plastique (1) étant intégré, au moins par tronçons, le long de la paroi de réservoir (2), l'au moins un conduit (3) s'étendant par parties dans la paroi de réservoir (2) parallèlement à la paroi de réservoir (2), **caractérisé en ce qu'**au moins un dispositif de chauffage (10) et/ou au moins une structure thermoconductrice (11) est au moins partiellement intégré(e) dans la paroi de réservoir (2) permettant ainsi de chauffer efficacement le fluide de travail qui est situé dans le conduit (3).

2. Réservoir en plastique (1) selon la revendication 1, dans lequel ledit réservoir en plastique est produit dans un procédé de moulage par injection.

3. Réservoir en plastique (1) selon l'une des revendications précédentes, dans lequel au moins un élément de raccordement (5) pour raccorder au moins un composant actif (6) d'une unité de distribution (14) pour distribuer le fluide de travail à l'au moins un conduit (3) est formé sur la paroi de réservoir (2).

4. Réservoir en plastique (1) selon la revendication 3, dans lequel un élément de raccordement (5) est au moins un raccord (7) destiné à être raccordé via une conduite de fluide (8) à un injecteur (9).

5. Réservoir en plastique (1) selon l'une ou l'autre des revendications 3 et 4, dans lequel l'au moins un élément de raccordement (5) est formé d'une seule pièce avec la paroi de réservoir (2).

6. Réservoir en plastique (1) selon l'une des revendications précédentes, dans lequel au moins un conduit (3) dans la paroi de réservoir (2) débouche au niveau d'un point d'aspiration (12) pour l'extraction du fluide de travail du réservoir en plastique (1).

7. Réservoir en plastique (1) selon l'une des revendications précédentes, dans lequel au moins un conduit (3) dans la paroi de réservoir (2) forme une ligne de retour (13) à travers laquelle le fluide de travail peut circuler du réservoir en plastique (1) à travers une unité de distribution (14) et retourner dans le réservoir en plastique (1).

8. Dispositif (15) pour fournir un fluide de travail dans un véhicule automobile (16), comprenant au moins un réservoir en plastique (1) selon l'une des revendications précédentes, dans lequel le fluide de travail est stocké, et une unité de distribution (14) pour distribuer le fluide de travail hors du réservoir en plastique (1), l'unité de distribution (14) étant formée avec au moins un composant actif (6) qui est relié à un conduit (3) dans la paroi de réservoir (2) du réservoir en plastique (1).

9. Véhicule automobile (16) comportant un moteur à combustion interne (17), un dispositif de traitement des gaz d'échappement (18) pour l'épuration des gaz d'échappement du moteur à combustion interne (17) et un dispositif (15) selon la revendication 8 pour fournir un fluide de fonctionnement au dispositif de traitement des gaz d'échappement (18).
